(19) Europäisches Patentamt
European Patent Office
Office européen des brevets

(11) EP 3 087 695 B1

(12) **FASCICULE DE BREVET EUROPEEN**

(45) Date de publication et mention de la délivrance du brevet:
**20.09.2017 Bulletin 2017/38**

(21) Numéro de dépôt: **14828239.5**

(22) Date de dépôt: **18.12.2014**

(51) Int Cl.:
**H04L 5/00** (2006.01)    H04B 3/54 (2006.01)

(86) Numéro de dépôt international:
**PCT/FR2014/053408**

(87) Numéro de publication internationale:
**WO 2015/097368 (02.07.2015 Gazette 2015/26)**

(54) **SÉLECTION D'UN SOUS-ENSEMBLE DE PORTEUSES ADJACENTES DANS UN SYSTÈME OFDM**

AUSWAHL EINER TEILMENGE VON BENACHBARTEN TRÄGERN IN EINEM OFDM-SYSTEM

SELECTION OF A SUBSET OF ADJACENT CARRIERS IN AN OFDM SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2013 FR 1363383**

(43) Date de publication de la demande:
**02.11.2016 Bulletin 2016/44**

(73) Titulaire: **Orange**
**75015 Paris (FR)**

(72) Inventeurs:
• **JAVAUDIN, Jean-Philippe**
  **F-35235 Thorigne Fouillard (FR)**
• **LE BOT, Marie**
  **F-35700 Rennes (FR)**

(74) Mandataire: **Mathan, Luc Stefan et al**
**Orange**
**IMTW/OLPS/IPL/PAT**
**Orange Gardens**
**44 Avenue de la République**
**CS 50010**
**92326 Châtillon Cedex (FR)**

(56) Documents cités:
**WO-A1-01/95582    WO-A1-2013/054266**

• **BINGHAM J A C: "MULTICARRIER MODULATION FOR DATA TRANSMISSION: AN IDEA WHOSE TIME HAS COME", IEEE COMMUNICATIONS MAGAZINE, vol. 28, no. 5, mai 1990 (1990-05), pages 5-12, XP000132491, IEEE SERVICE CENTER, PISCATAWAY, NJ, USA ISSN: 0163-6804, DOI: 10.1109/35.54342**
• **MING LEI ET AL: "Subband bit and power loading for adaptive OFDM", IEEE 58TH VEHICULAR TECHNOLOGY CONFERENCE (VTC), 2003, HELD IN ORLANDO, FL, USA, vol. 3, 6 octobre 2003 (2003-10-06), pages 1482-1486, XP010702474, PISCATAWAY, NJ, USA DOI: 10.1109/VETECF.2003.1285271 ISBN: 978-0-7803-7954-1**

**Description**

**1. Domaine de l'invention**

La demande d'invention se situe dans le domaine de la modulation multi-porteuse dans un canal de transmission, technique aussi connue sous l'appellation OFDM (Orthogonal Frequency-Division Multiplexing, ou multiplexage par division en fréquences orthogonales, en français), et porte plus particulièrement sur la réduction en complexité et en consommation énergétique d'un système basé OFDM.

**2. Etat de la technique antérieure**

Dans un modem de transmission par courant porteur en ligne (CPL), les transmissions CPL sont effectuées à l'aide de modulations multi-porteuses orthogonales (OFDM) car elles permettent de découper la bande de transmission en sous bandes de largeur étroite, appelées porteuses, sur lesquelles la réponse fréquentielle du canal de transmission (et donc le gain du canal de transmission) peut être considérée comme constante.

Dans de telles transmissions, une période d'apprentissage du canal est effectuée lors de la synchronisation entre l'émetteur et le récepteur afin de connaitre précisément le gain complexe sur chacune des porteuses du multiplex OFDM ainsi que le rapport signal à bruit sur chacune de ces porteuses. Ceci permet de construire un tableau de constellation ("tone map" en anglais), c'est à dire l'allocation d'un nombre adéquat de bits par symbole à transmettre sur les porteuses afin de garantir un taux d'erreur binaire cible qui soit limité.

La construction de ce tableau de constellation est effectuée lors d'une phase d'initialisation dans les transmissions CPL, car à l'échelle de temps des transmissions dans le canal de transmission, celui-ci peut être considéré comme invariant dans le temps. En effet les rares évènements susceptibles de modifier la réponse en fréquence du canal entre l'émetteur et le récepteur sont des événements tels que l'allumage ou l'extinction d'appareils électriques sur le réseau filaires. Ce tableau de constellation indiquant le nombre de bits à transmettre sur chaque sous porteuse, il permet de déterminer un débit maximum atteignable par le modem CPL sous contrainte d'un taux d'erreur cible, le but visé étant de maximiser la vitesse de transmission du flux de données binaires. Néanmoins si le débit requis pour transmettre un flux de données est bien plus faible que ce débit maximum, la complexité du modem est fortement surdimensionnée et induit un gaspillage d'énergie.

Une solution existante mise en oeuvre est l'utilisation d'un tableau de constellation comprenant 2 valeurs uniquement (soit aucun, soit un nombre réduit et constant de bits par symbole transmis). Ceci permet de construire un signal robuste, dont la complexité de modulation/démodulation est fortement réduite. Néanmoins le débit possible d'une transmission avec une telle solution est fixe et très limité. Les seules applications possibles d'une telle solution sont dans le domaine des communications entre machines (M2M) qui requièrent des débits généralement fixes et dans tous les cas très limités, ce qui exclut des applications exigeant des débits dynamiques et moins limités, telles que par exemple la télévision sur IP, etc.

L'article de John A. C. Bingham "Multicarrier Modulation for Data Transmission: An Idea Whose Time Has Come", publié dans "IEEE Communications Magazine", vol.28, no. 5, en mai 1990, présente la technique OFDM dans son application aux transmissions de données en général, et ne traite pas du problème lié aux variations de débit.

Un des buts de l'invention est de remédier à ces inconvénients de l'état de la technique.

**3. Exposé de l'invention**

L'invention est définie par les revendications indépendantes.

L'invention vient améliorer la situation à l'aide d'un procédé d'émission de données dans un canal de transmission par courant porteur en ligne, la bande de fréquence du canal étant divisée en un ensemble de sous-bandes orthogonales appelées porteuses, le procédé comprenant une étape d'estimation de la réponse fréquentielle de l'ensemble de porteuses du canal, une étape d'obtention des données à émettre, une étape de modulation en fréquence des données à l'aide d'un symbole par porteuse, un débit résultant du canal étant proportionnel au nombre de symboles utilisés et au nombre de bits utilisés pour coder chaque symbole, et une étape d'émission des données modulées dans le canal, le procédé comprenant en outre les étapes suivantes :

- allocation d'un nombre de bits par symbole pour au moins une porteuse du canal, en fonction de la réponse fréquentielle de la porteuse ;
- obtention d'une valeur de débit cible à transmettre sur le canal ;
- sélection d'un sous-ensemble de porteuses adjacentes dont le débit résultant est supérieur ou égal au débit cible ;
- mise à zéro du nombre de bits par symbole des porteuses non sélectionnées.

Grâce au procédé d'émission selon l'invention, les porteuses utilisées pour moduler les données à transmettre sont sélectionnées de façon à assurer le débit cible.

Réduire le nombre de porteuses tout en les gardant adjacentes simplifie les opérations de modulation, et induit une économie en énergie consommée par les composant électroniques utilisés pour effectuer les opérations de modulation.

Selon un aspect de l'invention, l'étape de modulation comprend un calcul de transformée de Fourrier dont la taille est réduite au sous-ensemble de porteuses adjacentes sélectionné.

En particulier, le fait que les porteuses soient réduites en nombre et adjacentes, simplifie les calculs dans les transformées de Fourier inverses rapides (iFFT), qui sont des opérations nécessaires et incontournables dans la technique OFDM, qui permettent de moduler un vecteur de symboles avec des données. Comme les calculs sont simplifiés, ils consomment moins d'énergie.

Selon un aspect de l'invention, l'étape d'obtention de la valeur de débit cible à transmettre sur le canal comprend une étape d'extraction d'une information relative au débit à partir des données obtenues.

Pour certains types de données tels que les flux vidéo les en-têtes des trames IP comprennent une valeur de débit qui est typiquement le tiers du nombre de bits nécessaire pour transmettre les données sur le canal de transmission, c'est à dire le tiers de dC. Grâce à cet aspect, le débit cible dC peut être donc calculé simplement à partir d'une information de débit directement extraite des données obtenues.

Selon un aspect de l'invention, le sous-ensemble sélectionné comprend la porteuse de fréquence la plus basse.

Sélectionner des porteuses adjacentes de fréquences basses permet de travailler directement en bande de base sans faire de translation fréquentielle, c'est à dire sans multiplier le signal par une fréquence intermédiaire afin de le décaler en fréquence et le positionner sur les les porteuses, ce qui simplifie les calculs et donc consomme moins d'énergie.

Selon un aspect de l'invention, le nombre de porteuses dans le sous-ensemble sélectionné est une puissance de deux, de trois ou de cinq.

Le fait que les porteuses sélectionnées soient non seulement réduites en nombre et adjacentes en fréquence, mais aussi que leur nombre soit une puissance de deux, de trois ou de cinq simplifie encore plus les calculs de transformées de Fourier inverses rapides (IFFT), et donc consomme moins d'énergie.

Selon un aspect de l'invention, le procédé d'émission comprend, préalablement à l'étape de sélection, une étape de regroupement des porteuses en blocs ordonnés par fréquence croissante comprenant au moins deux porteuses, et une étape itérative de calcul du débit cumulé résultant de l'ajout, par bloc, des porteuses des blocs ordonnés dans le sous-ensemble.

La recherche du nombre de porteuses nécessaires pour transmettre le débit cible est accélérée en regroupant les porteuses par bloc de taille fixe. Il est ainsi également possible de choisir une taille de bloc propice à la simplification ultérieure des opérations de modulation, comme par exemple une puissance de 2.

Selon un aspect de l'invention, l'étape de modulation comprend au moins une sous-étape de modulation par bloc de porteuses, la sous-étape de modulation par bloc comprenant l'ajout d'une information aux données à moduler, l'information indiquant l'existence dans le sous-ensemble sélectionné d'un bloc de fréquences supérieures.

L'information ajoutée permet au modem récepteur de démoduler les données en commençant toujours par le bloc de porteuses de rang le plus bas c'est à dire de fréquences les plus basses, puis de démoduler le bloc de rang immédiatement supérieur si l'information, une fois démodulée avec les données, lui indique que d'autres données dont à démoduler sur un autre bloc de porteuses, et d'arrêter l'opération de démodulation sinon. Ainsi, il n'est pas nécessaire pour le modem récepteur de savoir à l'avance sur combien de porteuses le modem émetteur a modulé les données. Il a seulement besoin de connaître la taille d'un bloc en nombre de porteuses, mais pas le nombre total de porteuses dans le sous-ensemble sélectionné. Cette taille peut être déterminée à l'avance et connue des modems émetteurs et récepteurs.

Selon un aspect de l'invention, le procédé d'émission comprend, préalablement à l'étape de sélection, une étape d'exclusion d'au moins une porteuse de l'ensemble, l'étape de sélection ne prenant pas en compte l'au moins une porteuse exclue.

Grâce à cet aspect, si un autre émetteur a préalablement sélectionné un sous-ensemble pour émettre des données dans le canal, il est possible pour l'émetteur d'utiliser le même canal en sélectionnant un sous-ensemble distinct. Le procédé comprend alors aussi une étape d'obtention d'une information relative à ce sous-ensemble préalablement sélectionné par un autre émetteur.

Une mutualisation du même canal est donc possible entre plusieurs couples émetteur-récepteur, sans interférence car les sous-ensembles sont distincts. Cette mutualisation permet ainsi une économie supplémentaire en ressource et en énergie.

Les différents aspects du procédé d'émission de données qui viennent d'être décrits peuvent être mis en oeuvre indépendamment les uns des autres ou en combinaison les un avec les autres.

L'invention concerne aussi un dispositif d'émission de données dans un canal de transmission par courant porteur en ligne, la bande de fréquence du canal étant divisée en un ensemble de sous-bandes orthogonales appelées porteuses, le dispositif apte à mettre en oeuvre le procédé d'émission de données qui vient d'être décrit, dans tous ses modes de réalisation, et comprenant un module d'estimation de la réponse fréquentielle de l'ensemble de porteuses du canal, un module d'obtention des données à émettre, un module de modulation en fréquence des données à l'aide d'un symbole par porteuse, un débit résultant du canal étant proportionnel au nombre de symboles utilisés et au nombre de bits utilisés pour coder chaque symbole, et un module d'émission des données modulées dans le canal, le dispositif comprenant en outre les modules suivants :

- allocation d'un nombre de bits par symbole pour au moins une porteuse du canal, en fonction de la réponse fréquentielle de la porteuse ;
- obtention d'une valeur de débit cible à transmettre sur le canal ;
- sélection d'un sous-ensemble de porteuses adjacentes dont le débit résultant est supérieur ou égal au débit cible ;
- mise à zéro du nombre de bits par symbole des porteuses non sélectionnées.

L'invention concerne encore un modem émetteur dans un système de courant porteur en ligne, comprenant au moins un dispositif d'émission tel que celui qui vient d'être décrit.

L'invention concerne aussi un système de transmission par courant porteur en ligne comprenant au moins un modem émetteur tel que celui qui vient d'être décrit et au moins un modem récepteur apte à recevoir un signal émis par l'au moins un modem émetteur.

L'invention concerne aussi un programme d'ordinateur comprenant des instructions pour la mise en oeuvre des étapes du procédé d'émission qui vient d'être décrit, lorsque ce programme est exécuté par un processeur.

L'invention concerne enfin un support d'enregistrement, lisible par un modem émetteur, sur lequel est enregistré le programme qui vient d'être décrit, pouvant utiliser n'importe quel langage de programmation, et être sous la forme de code source, code objet, ou de code intermédiaire entre code source et code objet, tel que dans une forme partiellement compilée, ou dans n'importe quelle autre forme souhaitable.

## 4. Présentation des figures

D'autre avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :

- la figure 1 présente un exemple de mise en oeuvre du procédé d'émission, selon un mode de réalisation de l'invention,
- la figure 2 présente un exemple de structure d'un dispositif d'émission, selon un aspect de l'invention.

## 5. Description détaillée d'au moins un mode de réalisation de l'invention

Dans la suite de la description, on présente des exemples de plusieurs modes de réalisation de l'invention se basant sur un canal de transmission par CPL, mais l'invention s'applique également à d'autres canaux de transmission ayant un comportement similaire en terme de réponse fréquentielle et de stabilité de la réponse fréquentielle, tel que certaines implémentations DSL comme par exemple le VDSL

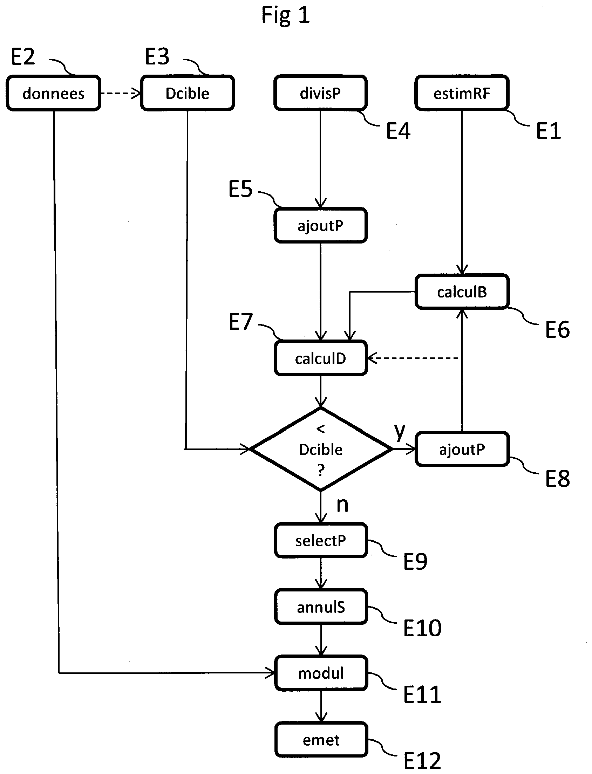

La **figure 1** présente un exemple de mise en oeuvre du procédé d'émission par un modem émetteur, selon un mode de réalisation de l'invention.

Lors d'une étape E1, de façon connue, la largeur de bande du canal CPL est divisée en un ensemble de n porteuses et la réponse fréquentielle des porteuses est estimée. En général, n est choisi pour être une puissance de 2, avec $n = 2^N$.

Lors d'une étape E2, le modem émetteur obtient des données à émettre par le canal de transmission CPL.

Lors d'une étape E3, le modem émetteur obtient une valeur de débit cible dC du canal, c'est à dire du débit nécessaire pour émettre les données obtenues. Cette valeur peut être obtenue conjointement aux données à émettre, donc pour chaque étape E1, ou séparément, la valeur de débit cible restant valable pour plusieurs cycles incluant une étape E1.

La manière d'obtenir le débit cible dC dépend du type de service dont les données sont à transmettre. Dans le cas d'un flux de type UDP (protocole utilisé pour les téléchargements) par exemple, la valeur de dC est fixée de façon prédéterminée et/ou arbitraire afin de limiter le débit à transmettre. Pour les flux vidéo par exemple, les en-têtes des trames IP comprennent une valeur de débit qui est typiquement le tiers du nombre de bits nécessaire pour transmettre les données sur le canal de transmission, c'est à dire le tiers de dC. Dans ce cas le débit cible dC peut être extrait des données obtenues lors de l'étape E1.

Les étapes E4 à E10 peuvent être effectuées en parallèle aux étapes E1 à E3, chaque fois que la valeur du débit cible change.

Lors d'une étape E4, l'ensemble de porteuses est divisée en k blocs de p porteuses chacune.

Lors d'une étape E5, un premier bloc de p porteuses est ajouté à un sous-ensemble de l'ensemble de porteuses initialement vide. Ce premier bloc comprend par exemple les p premières porteuses dans un ordre fréquentiel croissant.

Lors d'une étape E6, le nombre de bits qu'il est possible d'allouer à un symbole pour chacune des porteuses ajoutées au sous-ensemble est calculé, en fonction de la réponse fréquentielle des porteuses.

Lors d'une étape E7, le débit permis par le sous-ensemble de porteuses est calculé en fonction du nombre de bits par symbole de chaque porteuse du sous-ensemble. S'il est inférieur au débit cible dC, le procédé passe à une étape E8 d'incrémentation du nombre de porteuses à sélectionner. S'il est supérieur ou égal au débit cible dC, il n'est plus nécessaire d'augmenter le nombre de porteuses à sélectionner et le procédé passe à une étape E9.

Lors de l'étape E8, un autre bloc de p porteuses est ajouté au sous-ensemble de porteuses, puis le procédé retourne à l'étape E6. Ce bloc comprend par exemple les p porteuses suivant immédiatement celles qui sont déjà dans le sous-ensemble, dans un ordre fréquentiel croissant.

Lors de l'étape E9, le sous-ensemble résultant est sélectionné pour former la base de modulation des données à émettre.

Lors d'une étape E10, les symboles des porteuses qui ne sont pas dans le sous-ensemble sélectionné sont annulés, c'est à dire qu'aucun bit ne leur est alloué.

Lors d'une étape E11, les données sont modulées sur les porteuses du sous-ensemble sélectionné, c'est à dire sur les symboles des (m x p) porteuses, m étant le nombre de blocs ajoutées dans le sous-ensemble, c'est à dire aussi le nombre de cycles d'étapes E6-E7 effectués.

Lors d'une étape E12, les données modulées sont émise au travers du canal de transmission CPL.

Dans une première variante, l'étape E6 d'allocation du nombre de bits par symbole est effectuée en une fois pour toutes les porteuses sur toute la largeur de bande du canal. Après l'étape E8 d'incrémentation, le procédé passe alors à l'étape E7 de calcul du débit cumulé, et non pas à l'étape E6 d'allocation puisque toutes les porteuses se sont déjà vues allouer un nombre de bits.

Dans une seconde variante, lors de l'étape E12 le modem émetteur module dans chaque bloc de porteuses du sous-ensemble sélectionné une donnée de signalisation indiquant si des données sont modulées dans un autre bloc de porteuses de fréquence supérieure, ou de "rang supérieur". Cette indication permet au modem récepteur de démoduler les données en commençant toujours par le bloc de porteuses de rang le plus bas (de fréquences les plus basses), puis de démoduler le bloc de rang immédiatement supérieur si l'indication l'y invite, et d'arrêter l'opération de démodulation sinon. Ainsi, il n'est pas nécessaire pour le modem récepteur de savoir à l'avance sur combien de porteuses le modem émetteur a modulé les données. Il a seulement besoin de connaître la taille p d'un bloc de porteuses, mais pas le nombre total de porteuses sélectionnées dans le sous-ensemble.

Les variantes décrites ci-dessus peuvent être combinées.

Dans un mode de réalisation préféré, k et p sont des puissances de 2 et m est choisi tel que le nombre total de porteuses sélectionnées (m x p) soit aussi une puissance de 2,

On a donc $m = 2^M$, et $P = (N - K)$, puisque $(2^K \times 2^P) = 2^N$.

Ainsi, pour une bande de fréquence de départ contenant $n = 2^N$ porteuses, divisées en $2^K$ blocs contenant chacun $p = 2^{N-K}$ porteuses, nous avons :

$$(m \times p) = 2^{N+M-K}, M < K.$$

Selon la technique antérieure, le modem émetteur doit effectuer une transformée de Fourrier inverse rapide de taille $2^N$. Grâce au procédé selon l'invention, lors de l'étape E11, le modem émetteur effectue une iFFT de taille $2^{N+M-K}$ seulement.

La complexité d'un iFFT étant proportionnelle à $(2^N \log_2(2^N) = N \times 2^N)$ pour une iFFT de taille $2^N$, la réduction de complexité obtenue grâce à l'invention est par exemple un rapport de 5 pour les valeurs typiques suivantes:

Taille de la iFFT initiale: $2^N = 1024$ , où N = 10 ;
Nombre total de blocs: $2^K = 16$ , où K = 4 ;
Nombre de blocs sélectionnés: $2^M = 4$ , où M = 2 ;
⇒ Taille de la iFFT finale: $(2^M \times 2^N)/2^K = 2^8 = 256$ ;

Cette réduction en complexité est identique pour le calcul des transformées de Fourrier rapide du côté du modem récepteur.

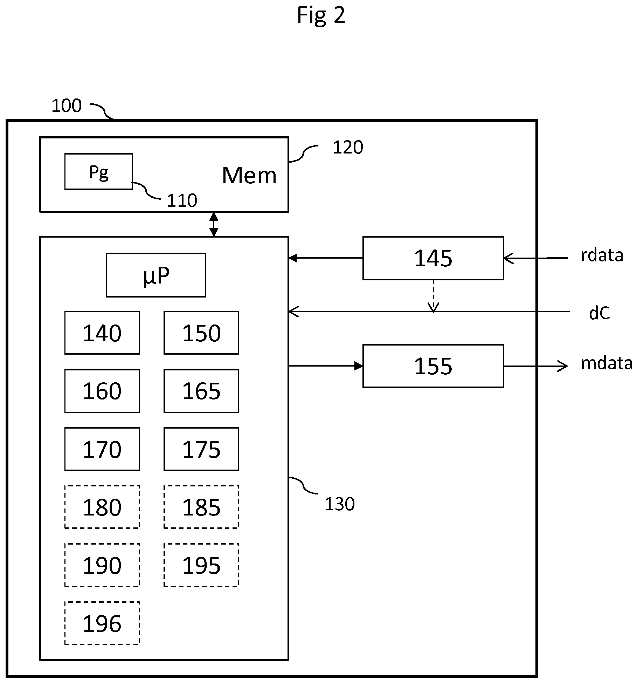

En relation avec la **figure 2,** on présente maintenant un exemple de structure d'un dispositif d'émission, selon un aspect de l'invention.

Le dispositif 100 d'émission met en oeuvre le procédé de transmission d'information de routage, dont différents modes de réalisation viennent d'être décrits.

Un tel dispositif 100 peut être mis en oeuvre dans un modem CPL.

Par exemple, le dispositif 100 comprend une unité de traitement 130, équipée par exemple d'un microprocesseur µP, et pilotée par un programme d'ordinateur 110, stocké dans une mémoire 120 et mettant en oeuvre le procédé d'émission selon l'invention. A l'initialisation, les instructions de code du programme d'ordinateur 110 sont par exemple chargées dans une mémoire RAM, avant d'être exécutées par le processeur de l'unité de traitement 130.

Un tel dispositif 100 comprend :

- un module 140 d'estimation de la réponse fréquentielle de l'ensemble de porteuses du canal,
- un module 145 d'obtention des données à émettre (rdata),
- un module 150 de modulation en fréquence des données à l'aide d'un symbole par porteuse,
- un module 155 d'émission des données modulées dans le canal (mdata),
- un module 160 d'allocation d'un nombre de bits par symbole pour au moins une porteuse du canal, en fonction de la réponse fréquentielle de la porteuse,
- un module 165 d'obtention d'une valeur de débit cible (dC) à transmettre sur le canal,
- un module 170 de sélection d'un sous-ensemble de porteuses adjacentes dont le débit résultant est supérieur ou égal au débit cible,
- un module 175 de mise à zéro du nombre de bits par symbole des porteuses non sélectionnées.

Avantageusement, l'unité de traitement 130 peut également comprendre:

- un module 180 de regroupement des porteuses en blocs ordonnés par fréquence croissante comprenant au moins deux porteuses,
- un module 185 de calcul itératif du débit cumulé résultant de l'ajout, par bloc, des porteuses des blocs ordonnés dans le sous-ensemble,
- un module 190 d'extraction d'une information relative au débit à partir des données obtenues,
- un module 195 de modulation par bloc de porteuses, apte à ajouter une information aux données à moduler, l'information indiquant l'existence dans le sous-ensemble sélectionné d'un bloc de fréquences supérieures,
- un module 196 d'exclusion d'au moins une porteuse de l'ensemble, de sorte à ce qu'elles en soient pas sélectionnées dans le sous-ensemble de porteuses sélectionnées.

Les modules décrits en relation avec la figure 2 peuvent être des modules matériels ou logiciels.

Les exemples de réalisation de l'invention qui viennent d'être présentés ne sont que quelques-uns des modes de réalisation envisageables. Ils montrent que l'invention permet de réduire la consommation en énergie d'un modem émettant dans un canal de transmission par courant porteur en ligne, en simplifiant les opérations nécessaires à la modulation des données à transmettre. De façon correspondante, l'invention permet également cette réduction de consommation d'énergie dans le modem récepteur.

**Revendications**

1. **Procédé d'émission** de données dans un canal de transmission par courant porteur en ligne, la bande de fréquence du canal étant divisée en un ensemble de sous-bandes orthogonales appelées porteuses, le procédé comprenant une étape d'estimation (E1) de la réponse fréquentielle de l'ensemble de porteuses du canal, une étape d'obtention (E2) des données à émettre, une étape de modulation (E11) des données à l'aide d'un symbole par porteuse, le débit résultant du canal étant proportionnel au nombre de symboles utilisés et au nombre de bits utilisés pour coder chaque symbole, et une étape d'émission (E12) des données modulées dans le canal, le procédé comprenant en outre les étapes suivantes :

   • allocation (E6) d'un nombre de bits par symbole pour au moins une porteuse du canal, en fonction de la réponse fréquentielle de la porteuse ;
   • obtention (E3) d'une valeur de débit cible à transmettre sur le canal ;
   • sélection (E9), chaque fois que change la valeur de débit cible, d'un sous-ensemble de porteuses adjacentes dont le débit résultant est supérieur ou égal au débit cible, l'étape de modulation comprenant une étape de calcul de transformée de Fourier dont la taille est réduite au sous-ensemble de porteuses adjacentes sélectionné ;
   • mise à zéro (E10) du nombre de bits par symbole des porteuses non sélectionnées.

2. **Procédé** selon l'une des revendications précédentes, **caractérisé en ce que** l'étape d'obtention (E3) de la valeur de débit cible à transmettre sur le canal comprend une étape d'extraction d'une information relative au débit à partir des données obtenues.

3. **Procédé** selon l'une des revendications précédentes, **caractérisé en ce que** le sous-ensemble sélectionné comprend la porteuse de rang le plus bas.

4. **Procédé** selon l'une des revendications précédentes, **caractérisé en ce que** le nombre de porteuses dans le sous-ensemble sélectionné est une puissance de deux, de trois ou de cinq.

5. **Procédé** selon l'une des revendications précédentes, **caractérisé en ce qu'**il comprend, préalablement à l'étape de sélection (E9), une étape de regroupement des porteuses en blocs ordonnés par fréquence croissante comprenant au moins deux porteuses, et une étape itérative de calcul du débit cumulé résultant de l'ajout, par bloc, des porteuses des blocs ordonnés dans le sous-ensemble.

6. **Procédé** selon la revendication précédente, **caractérisé en ce que** l'étape de modulation (E11) comprend au moins une sous-étape de modulation par blocs de porteuses, la sous-étape de modulation par bloc comprenant l'ajout d'une information aux données à moduler, l'information indiquant l'existence dans le sous-ensemble sélectionné d'un bloc de rang supérieur.

7. **Procédé** selon l'une des revendications précédentes, **caractérisé en ce qu'**il comprend, préalablement à l'étape de sélection (E9), une étape d'exclusion d'au moins une porteuse de l'ensemble, l'étape de sélection ne prenant pas en compte l'au moins une porteuse exclue.

8. **Dispositif** (100) d'émission de données par un canal de transmission par courant porteur en ligne, la bande de fréquence du canal étant divisée en un ensemble de sous-bandes orthogonales appelées porteuses, le dispositif comprenant un module d'estimation (140) de la réponse fréquentielle de l'ensemble de porteuses du canal, un module d'obtention (145) des données à émettre, un module de modulation (150) des données à l'aide d'un symbole par porteuse, le débit résultant du canal étant proportionnel au nombre de symboles utilisés et au nombre de bits utilisés pour coder chaque symbole, et un module d'émission (155) des données modulées dans le canal, le dispositif comprenant en outre les modules suivants :

    • allocation (160) d'un nombre de bits par symbole pour au moins une porteuse du canal, en fonction de la réponse fréquentielle de la porteuse ;
    • obtention (165) d'une valeur de débit cible à transmettre sur le canal ;
    • sélection (170), chaque fois que change la valeur de débit cible, d'un sous-ensemble de porteuses adjacentes dont le débit résultant est supérieur ou égal au débit cible, le module de modulation calculant une transformée de Fourier dont la taille est réduite au sous-ensemble de porteuses adjacentes sélectionné ;
    • mise à zéro (175) du nombre de bits par symbole des porteuses non sélectionnées.

9. **Modem émetteur** comprenant au moins un dispositif d'émission (100) selon la revendication 8.

10. **Système de transmission par courant porteur en ligne** comprenant au moins un modem émetteur selon la revendication 9 et au moins un modem récepteur apte à recevoir un signal émis par l'au moins un modem émetteur.

11. **Programme d'ordinateur, caractérisé en ce qu'**il comprend des instructions pour la mise en oeuvre des étapes du procédé d'émission selon la revendication 1, lorsque ce procédé est exécuté par un processeur.

12. **Support d'enregistrement** lisible par un modem émetteur sur lequel est enregistré le programme selon la revendication 11.

**Patentansprüche**

1. Verfahren zum Senden von Daten in einem Übertragungskanal über Power Line Communication , wobei das Frequenzband des Kanals in eine Einheit von orthogonalen Unterbändern, Träger genannt, unterteilt ist, wobei das Verfahren einen Schritt der Schätzung (E1) der Frequenzantwort der Einheit von Trägern des Kanals, einen Schritt des Erhalts (E2) der zu sendenden Daten, einen Schritt der Modulation (E11) der Daten mit Hilfe eines Symbols pro Träger, wobei der resultierende Durchsatz des Kanals proportional zur Anzahl von verwendeten Symbolen und zur Anzahl von verwendeten Bits zum Codieren jedes Symbols ist, und einen Schritt des Sendens (E12) der modulierten Daten in dem Kanal umfasst, wobei das Verfahren ferner die folgenden Schritte umfasst:

    - Zuteilung (E6) einer Anzahl von Bits pro Symbol zu mindestens einem Träger des Kanals in Abhängigkeit von der Frequenzantwort des Trägers;
    - Erhalt (E3) eines auf dem Kanal zu übertragenden Zieldurchsatzwerts;
    - immer wenn sich der Zieldurchsatzwert ändert, Auswahl (E9) einer Untereinheit von aneinandergrenzenden Trägern, dessen resultierender Durchsatz größer oder gleich dem Zieldurchsatz ist, wobei der Modulationsschritt einen Schritt der Berechnung einer Fourier-Transformierten umfasst, deren Größe auf die ausgewählte Untereinheit von aneinandergrenzenden Trägern reduziert ist;
    - Setzung auf null (E10) der Anzahl von Bits pro Symbol der nicht ausgewählten Träger.

2. Verfahren nach einem der vorhergehenden Ansprüche, **dadurch gekennzeichnet, dass** der Schritt des Erhalts (E3) des auf dem Kanal zu übertragenden Zieldurchsatzwerts einen Schritt der Entnahme einer den Durchsatz betreffenden Information auf Basis der erhaltenen Daten umfasst.

3. Verfahren nach einem der vorhergehenden Ansprüche, **dadurch gekennzeichnet, dass** die ausgewählte Untereinheit den Träger mit dem niedrigsten Rang umfasst.

4. Verfahren nach einem der vorhergehenden Ansprüche, **dadurch gekennzeichnet, dass** die Anzahl von Trägern in der ausgewählten Untereinheit eine Zweier-, Dreier- oder Fünferpotenz ist.

5. Verfahren nach einem der vorhergehenden Ansprüche, **dadurch gekennzeichnet, dass** es vor dem Auswahlschritt (E9) einen Schritt der Zusammenfassung der Träger zu nach steigender Frequenz geordneten Blöcken, umfassend mindestens zwei Träger, und einen iterativen Schritt der Berechnung des resultierenden kumulierten Durchsatzes der Hinzufügung der Träger der geordneten Blöcke in die Untereinheit pro Block umfasst.

6. Verfahren nach dem vorhergehenden Anspruch, **dadurch gekennzeichnet, dass** der Modulationsschritt (E11) mindestens einen Unterschritt der blockweisen Modulation von Trägern umfasst, wobei der Unterschritt der Modulation pro Block die Hinzufügung einer Information zu den zu modulierenden Daten umfasst, wobei die Information das Vorhandensein eines Blocks höheren Ranges in der ausgewählten Untereinheit anzeigt.

7. Verfahren nach einem der vorhergehenden Ansprüche, **dadurch gekennzeichnet, dass** es vor dem Auswahlschritt (E9) einen Schritt des Ausschlusses mindestens eines Trägers aus der Einheit umfasst, wobei der Auswahlschritt den mindestens einen ausgeschlossenen Träger nicht berücksichtigt.

8. Vorrichtung (100) zum Senden von Daten in einem Übertragungskanal über Power Line Communication , wobei das Frequenzband des Kanals in eine Einheit von orthogonalen Unterbändern, Träger genannt, unterteilt ist, wobei die Vorrichtung ein Modul zur Schätzung (140) der Frequenzantwort der Einheit von Trägern des Kanals, ein Modul zum Erhalt (145) der zu sendenden Daten, ein Modul zur Modulation (150) der Daten mit Hilfe eines Symbols pro Träger, wobei der resultierende Durchsatz des Kanals proportional zur Anzahl von verwendeten Symbolen und zur Anzahl von verwendeten Bits zum Codieren jedes Symbols ist, und ein Modul zum Senden (155) der modulierten Daten in dem Kanal umfasst, wobei die Vorrichtung ferner die folgenden Module umfasst:

   - Zuteilung (160) einer Anzahl von Bits pro Symbol zu mindestens einem Träger des Kanals in Abhängigkeit von der Frequenzantwort des Trägers;
   - Erhalt (165) eines auf dem Kanal zu übertragenden Zieldurchsatzwerts;
   - immer wenn sich der Zieldurchsatzwert ändert, Auswahl (170) einer Untereinheit von aneinandergrenzenden Trägern, dessen resultierender Durchsatz größer oder gleich dem Zieldurchsatz ist, wobei das Modulationsmodul eine Fourier-Transformierte berechnet, deren Größe auf die ausgewählte Untereinheit von aneinandergrenzenden Trägern reduziert ist;
   - Setzung auf null (175) der Anzahl von Bits pro Symbol der nicht ausgewählten Träger.

9. Sendemodem, umfassend mindestens eine Sendevorrichtung (100) nach Anspruch 8.

10. PLC-Übertragungssystem, umfassend mindestens ein Sendemodem nach Anspruch 9 und mindestens ein Empfangsmodem, das geeignet ist, ein von mindestens einem Sendemodem gesandtes Signal zu empfangen.

11. Computerprogramm, **dadurch gekennzeichnet, dass** es Befehle für den Einsatz der Schritte des Sendeverfahrens nach Anspruch 1 umfasst, wenn dieses Verfahren von einem Prozessor ausgeführt wird.

12. Aufzeichnungsträger, der von einem Sendemodem lesbar ist und auf dem das Programm nach Anspruch 11 aufgezeichnet ist.

**Claims**

1. **Method for sending** data in a transmission channel by power line communication, the frequency band of the channel being divided into a set of orthogonal sub-bands called carriers, the method comprising a step (E1) of estimating the frequency response of the set of carriers of the channel, a step (E2) of obtaining the data to be sent, a step (E11) of modulating the data with the aid of one symbol per carrier, the resulting bitrate of the channel being proportional to the number of symbols used and to the number of bits used to code each symbol, and a step (E12) of sending the modulated data in the channel, the method furthermore comprising the following steps:

   • allocation (E6) of a number of bits per symbol for at least one carrier of the channel, as a function of the frequency response of the carrier;
   • obtaining (E3) of a value of target bitrate to be transmitted over the channel;
   • selection (E9), each time that the value of target bitrate changes, of a subset of adjacent carriers whose resulting bitrate is greater than or equal to the target bitrate, the modulation step comprising a step of Fourier transform calculation whose size is reduced to the selected subset of adjacent carriers;
   • setting to zero (E10) of the number of bits per symbol of the unselected carriers.

2. **Method** according to one of the preceding claims, **characterized in that** the step (E3) of obtaining the value of target bitrate to be transmitted over the channel comprises a step of extracting an information item relating to the bitrate on the basis of the data obtained.

3. **Method** according to one of the preceding claims, **characterized in that** the selected subset comprises the carrier of lowest rank.

4. **Method** according to one of the preceding claims, **characterized in that** the number of carriers in the selected subset is a power of two, of three or of five.

5. **Method** according to one of the preceding claims, **characterized in that** it comprises, prior to the selection step (E9), a step of grouping the carriers into blocks ordered by increasing frequency comprising at least two carriers, and a step of iteratively calculating the aggregate bitrate resulting from the addition, block-wise, of the carriers of the ordered blocks in the subset.

**6. Method** according to the preceding claim, **characterized in that** the modulation step (E11) comprises at least one sub-step of modulation per block of carriers, the block-wise modulation sub-step comprising the addition of an information item to the data to be modulated, the information item indicating the existence in the selected subset of a block of higher rank.

**7. Method** according to one of the preceding claims, **characterized in that** it comprises, prior to the selection step (E9), a step of excluding at least one carrier of the set, the selection step not taking into account the at least one excluded carrier.

**8. Device** (100) for sending data through a transmission channel by power line communication, the frequency band of the channel being divided into a set of orthogonal sub-bands called carriers, the device comprising a module (140) for estimating the frequency response of the set of carriers of the channel, a module (145) for obtaining the data to be sent, a module (150) for modulating the data with the aid of one symbol per carrier, the resulting bitrate of the channel being proportional to the number of symbols used and to the number of bits used to code each symbol, and a module (155) for sending the modulated data in the channel, the device furthermore comprising the following modules:

- allocation (160) of a number of bits per symbol for at least one carrier of the channel, as a function of the frequency response of the carrier;
- obtaining (165) of a value of target bitrate to be transmitted over the channel;
- selection (170), each time that the value of target bitrate changes, of a subset of adjacent carriers whose resulting bitrate is greater than or equal to the target bitrate, the modulation module comprising a step of Fourier transform calculation whose size is reduced to the selected subset of adjacent carriers;
- setting to zero (175) of the number of bits per symbol of the unselected carriers.

**9. Sender modem** comprising at least one sending device (100) according to Claim 8.

**10. Power line communication transmission system** comprising at least one sender modem according to Claim 9 and at least one receiver modem able to receive a signal sent by the at least one sender modem.

**11. Computer program, characterized in that** it comprises instructions for the implementation of the steps of the sending method according to Claim 1, when this method is executed by a processor.

**12. Recording medium** readable by a sender modem, on which the program according to Claim 11 is recorded.

## Fig 1

E2 donnees - - -> E3 Dcible      divisP      E4      estimRF      E1

E5 ajoutP

calculB      E6

E7 calculD  <- - - - - -

< Dcible ?      y      ajoutP      E8

n

selectP      E9

annulS      E10

modul      E11

emet      E12

## Fig 2

## RÉFÉRENCES CITÉES DANS LA DESCRIPTION

**Littérature non-brevet citée dans la description**

- **JOHN A. C. BINGHAM.** Multicarrier Modulation for Data Transmission: An Idea Whose Time Has Come. *IEEE Communications Magazine,* Mai 1990, vol. 28 (5